(19) Europäisches Patentamt / European Patent Office / Office européen des brevets

(11) **EP 4 479 676 B1**

(12) **EUROPEAN PATENT SPECIFICATION**

(45) Date of publication and mention
of the grant of the patent:
**22.10.2025 Bulletin 2025/43**

(21) Application number: **23711547.2**

(22) Date of filing: **17.02.2023**

(51) International Patent Classification (IPC):
**F17C 13/04** *(2006.01)*

(52) Cooperative Patent Classification (CPC):
**F17C 13/04;** F17C 2201/0109; F17C 2201/032;
F17C 2201/056; F17C 2201/058; F17C 2205/0126;
F17C 2205/0165; F17C 2205/0308;
F17C 2205/0329; F17C 2205/0382;
F17C 2205/0394; F17C 2221/011; F17C 2223/0123;
F17C 2223/036; F17C 2250/032; (Cont.)

(86) International application number:
**PCT/IB2023/051455**

(87) International publication number:
**WO 2023/156960 (24.08.2023 Gazette 2023/34)**

(54) **METHOD FOR MONITORING THE PASSAGE OF GAS THROUGH A SUPPLY TUBE AND VALVE CONFIGURED FOR IMPLEMENTING IT**

VERFAHREN ZUR ÜBERWACHUNG DES GASDURCHFLUSSES DURCH EIN VERSORGUNGSROHR UND ZUR DURCHFÜHRUNG DES VERFAHRENS KONFIGURIERTES VENTIL

PROCÉDÉ DE SURVEILLANCE DU PASSAGE DE GAZ À TRAVERS UN TUBE D'ALIMENTATION ET CLAPET CONÇU POUR SA MISE EN OEUVRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.02.2022 IT 202200002930**

(43) Date of publication of application:
**25.12.2024 Bulletin 2024/52**

(73) Proprietor: **Cavagna Group S.p.a.**
**25011 Calcinato (IT)**

(72) Inventors:
• **COMPAGNONI, Matteo**
**25058 Sulzano (BS) (IT)**
• **NICOLINI, Giancarlo**
**25089 Villanuova (BS) (IT)**
• **RAGNOLI, Paolo**
**25020 Poncarale (BS) (IT)**

(74) Representative: **Locas, Davide et al**
**Cantaluppi & Partners S.r.l.**
**Piazzetta Cappellato Pedrocchi, 18**
**35122 Padova (IT)**

(56) References cited:
EP-A1- 3 913 276      WO-A1-2021/255702
FR-A1- 3 112 839      US-A1- 2019 376 649
US-B1- 10 655 786     US-B2- 10 619 795

(52) Cooperative Patent Classification (CPC): (Cont.)
F17C 2250/036; F17C 2250/043; F17C 2250/0439;
F17C 2250/0473; F17C 2250/0478; F17C 2260/024;
F17C 2270/025; F17C 2270/05

**Description**

The present invention relates to a method for monitoring the passage of gas through a supply tube. The supply is carried out via a valve group of the type comprising a shutoff device which is capable of intercepting an outlet opening of the valve group in order to prevent the flow of gas being discharged, and a rotary control element which is configured to move the shutoff device from a closed position to an open position. The invention also relates to a valve group comprising a control unit which is configured to carry out the above-mentioned method.

More generally, the present invention is used, though not exclusively, in the technical sector of technical and medical gas storage within suitable pressurized containers.

These containers are widely used as containers for high-pressure gas, such as, for example, oxygen, air, industrial gases or gases for medical and domestic use, and provide for the presence of suitable valves which are intended for supplying the gas and where applicable regulating the pressure thereof.

In some technical fields, such as, for example, the medical field, it is desirable to provide the valve with an information system which is capable of providing the user with a series of data and information items relating to the operating conditions of the gas present in the container in addition to the pressure value supplied by a conventional pressure gauge.

To this end, there are known solutions in which the valves are provided with electronic devices such as pressure sensors for reading the pressure in the bottle, heat sensors for measuring the temperature of the system - the use of logic units capable of processing these data making it possible to predict the end of use in accordance with current consumption - alarm systems connected with combinations of data evaluated as being at risk.

In some technical fields, the need to be able to have a precise and reliable indication of the residual supply time of the gas present inside a container is particularly perceived. Consider, for example, the medical field, in which it is necessary to reliably know for how much time a bottle will still be able to supply oxygen to a patient in order to be able to programme the replacement thereof or in any case the interventions required at the end of the supply thereof. This necessity may further be perceived in all the technical fields in which it is necessary to know for how much time a bottle will be able to supply the gas contained therein.

Examples of valves provided with systems capable of supplying an indication of the residual supply time are described in US 10,619,795 B2, EP3754245, US9273799, US9816642, EP3405716 or EP3097342.

In these known solutions, the residual capacity of the bottle is calculated by means of an estimate based either on the position of the wheel or on the pressure conditions inside the bottle.

However, it is desirable to improve the reliability and the precision in estimating the residual capacity of the bottle under the different operating conditions.

Therefore, the problem addressed by the present invention is to provide a method for determining the residual supply time of the gas present in a bottle which is functionally configured to at least partially overcome one or more of the disadvantages set out with reference to the cited prior art.

Another object is to provide a method for determining the residual supply time of the gas, in which the indication of the residual supply time present and the position of the control element can be suitably measured and supplied to a user in any angular position thereof and under any operating condition of the bottle.

This problem is solved and one or more of these objects are at least partially achieved by the invention by a method for monitoring the passage of gas through a supply tube according to claim 1.

Therefore, it will be appreciated that the method according to the present invention allows actual monitoring of the actual supply conditions through the tube to be carried out, therefore allowing an intervention in the event of emergency conditions or in any case incorrect operating conditions.

The method preferably also provides for measuring the angular position ($\alpha$) of the control element, the pressure of the gas and the temperature of the gas being measured only when the control element is rotated into a position for opening the valve group. The operation of the unit provided for carrying out the method can thereby be optimized with a resultant reduction in the consumption levels.

To this end, it must be observed that the bottles can remain stored in the long term, providing an actual supply step with a greatly reduced duration with respect to the overall service-life of the bottle.

On the basis of yet another aspect, the first time T0 and the second time Tf define a time period which is variable in accordance with the angular position $\alpha$ of the control element. Preferably, the time period decreases with an increase in the flow rate of gas imposed on the basis of the angular position $\alpha$ of the control element.

In this manner, the time period used in the monitoring can advantageously be defined on the basis of the flow rate of the gas, adopting the angular position of the control element as an indirect indication of this value.

Preferably, the time period takes on at least two different values, and wherein there is defined such a limit position $\alpha$lim of the control element that, when the control element is in a position between a closed position and the limit position $\alpha$lim, the time period takes on the first value and when the limit position $\alpha$lim is exceeded the time period takes on the second value. The limit position $\alpha$lim preferably corresponds to a value between 1/5 and 1/10 of the maximum flow rate of gas which can be supplied through the valve group. Even more preferably, the limit

position $\alpha$lim corresponds to a flow rate of 2 l/min.

These features allow a simplification of the implementation of the method while being found to be actual in monitoring the supply under different operating conditions.

According to another aspect of the invention, the angular position of the control element is measured by means of a magnetic tunnel effect angle sensor TMR. This sensor is found to be particularly suitable for being interfaced with a control unit so as to apply the method of the present invention.

According to another aspect, the invention also relates to a valve group for pressurized containers comprising a main structure and a rotary control element which is rotatably connected to the main structure and which is configured so as to allow a flow of gas through the valve group in accordance with an angular position $\alpha$ thereof about a main rotation axis X, a pressure sensor, a temperature sensor and a control unit.

The control unit can generally be configured so as to implement the method of the present invention and the preferred features thereof, such as, for example, the ones set out above.

In some embodiments, the valve group further comprises a movement conversion mechanism which is configured so as to convert the movement of the rotary control element about the main axis into a corresponding rotational movement of the movable member about the auxiliary axis. The auxiliary axis is different from the main rotation axis.

Preferably, the auxiliary rotation axis is parallel with and offset with respect to the main rotation axis.

It will be appreciated that, in addition to the above-mentioned advantages, as a result of the possibility of precisely measuring the position of the control element during the supply, it is possible to instruct the logic unit to supply during the first times of use coherent hypotheses for duration based on a calculation routine.

The use of a mechanism which is capable of converting the rotation of the control element into the rotation about a different axis further advantageously allows movement of the sensor portion outside the control element, contributing to the construction simplicity of the valve group. At the same time, the rotational movement which is transmitted allows a solution which takes up little space to be obtained.

Preferably, the angular position sensor is a magnetic tunnel effect angle sensor TMR.

According to some aspects of the invention, the angular position sensor defines a measurement axis Y' which is aligned with the auxiliary rotation axis.

On the basis of this aspect, therefore, the sensor can be aligned with the magnet which is present in the movable member.

This feature contributes to minimizing the energy consumption of the sensor, advantageously allowing a long duration of the batteries which are necessary for the operation thereof.

Using a TMR type sensor is further particularly advantageous for the measurement precision and the reduced levels of consumption.

In some embodiments, the movement conversion mechanism comprises a first toothed portion which is fixedly joined in terms of rotation to the control element and a second toothed portion which is fixedly joined in terms of rotation to the movable member and which meshes with the first toothed portion.

Preferably, the first toothed portion is constructed in the region of a collar which is formed in the control element.

As a result of these aspects, it is possible to construct a particularly simple and reliable mechanism which has small dimensions.

It will be appreciated that the preferred features of one aspect of the invention may also be applied to the other aspects of the invention. Furthermore, preferred features of the invention will be more generally defined by the dependent claims.

The features and advantages of the invention will be better appreciated from the detailed description of a number of embodiments thereof which are illustrated by way of non-limiting example with reference to the appended drawings, in which:

- Figure 1 is a perspective view of a valve group according to the present invention during use in a pressurized container;
- Figure 2 is a perspective view of a valve group according to the present invention;
- Figure 3 is a perspective view of a valve group according to an alternative embodiment of the present invention;

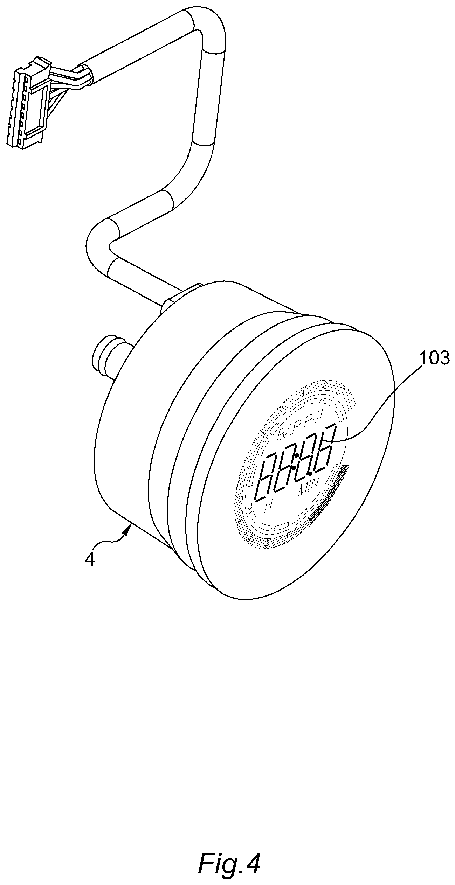

- Figure 4 is a perspective view of a control unit and a relevant display device of the valve group according to the present invention; and
- Figure 5 is a block diagram which illustrates a possible embodiment of the method according to the present invention.

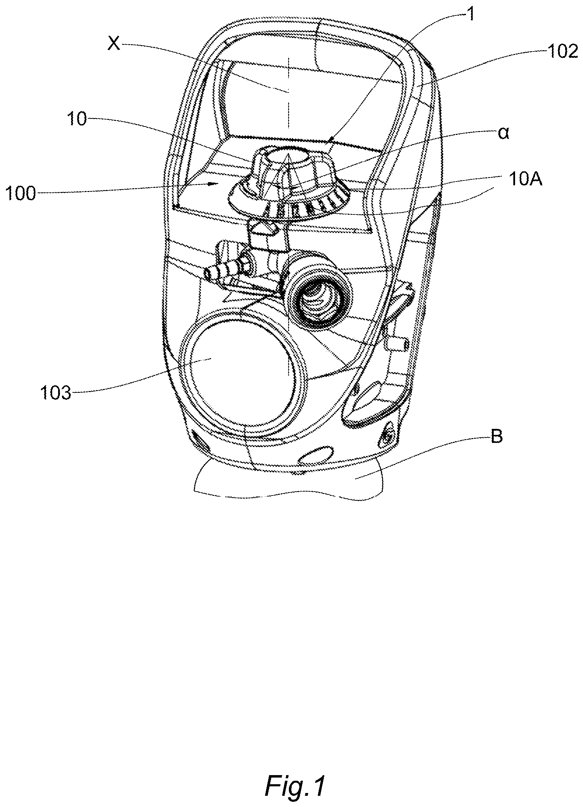

Initially with reference to Figure 1, a valve group according to the present invention is generally designated 100.

The valve group 100 is of the type intended for use in a pressurized container, for example, a bottle B, in order to control the discharge, and where applicable the intake in the refilling step, of the pressurized gas present inside the container.

The valve group 100 can advantageously be combined with a protection shell 102, which is provided with a handle, where applicable, and a display, or other display device 103, which is capable of indicating parameters or conditions which are characteristic of the gas present inside the container, as will be set out in greater detail below.

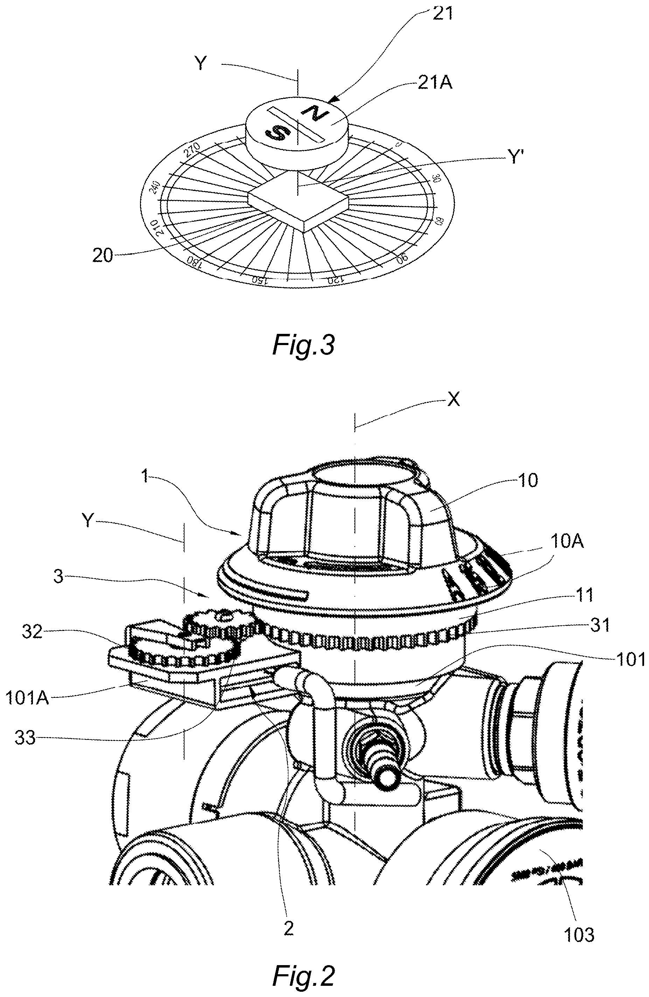

Now also with reference to Figure 2, the valve group 100 preferably comprises a control element 1 which can be partially projecting from the protection shell 102 in order to allow the manual actuation thereof by acting on a suitable gripping portion 10.

On the basis of an aspect of the invention, when the control element 1 is rotated in one direction, there is released a passage of gas being discharged from the valve group 100, supplying the gas present inside the pressurized container. A rotation in the opposite direction then brings about the closure thereof again. To this end, the valve group 100 may comprise a shutoff device which is not illustrated in the Figures and which is capable of intercepting a gas outlet opening.

In other words, when the shutoff device is closed, the gas is prevented from being discharged, by the control element 1 being rotated the shutoff device is opened and the gas can be supplied.

The rotation of the control element 1 is preferably carried out about a main rotation axis X.

Under normal supply conditions, for example, in the absence of obstructions or with a sufficiently full bottle, the angular position $\alpha$ of the control element about the rotation axis X determines the flow rate of gas which is supplied through the valve group 100. This may, for example, be brought about by throttling the opening of the shutoff device.

In order to allow the user to evaluate the position of the control element, and therefore the opening level of the valve group, the control element 1 may comprise a plurality of reference elements 10A which are positioned along a peripheral portion thereof and which correspond to various angular positions of the control element. These reference elements can, for example, be formed by reference numerals which indicate the flow rate of gas being supplied or a percentage with respect to the maximum opening of the valve group 100.

Still with reference to Figure 2, the valve group of the present invention further comprises a measuring device 2, by means of which the angular position $\alpha$ of the control element 1 can be determined indirectly. In this manner, the measuring device 2 will be able to measure any rotations of the control element 1 and the consequent opening of the shutoff device and therefore generally the valve group 100.

In preferred embodiments, the measuring device 2 includes an angular position sensor 20 and a movable member 21, which preferably comprises a magnet 21A, as better illustrated in the example of Figure 2 and in Figure 3.

The movable member 21 is advantageously rotatably supported on the main structure about an auxiliary rotation axis Y.

As will be better appreciated below, the auxiliary rotation axis Y is different from the main rotation axis X of the control element. In other words, the two axes are not mutually aligned. In some embodiments, the rotation axis Y can be parallel with and not aligned with the axis X.

As may be observed in Figure 2, the measuring device is preferably arranged laterally relative to the control element 1, i.e. arranged at the side thereof in a radial direction with respect to the axis X.

In preferred embodiments, the angular position sensor 20 is a magnetic tunnel effect angle sensor TMR. The angular position sensor 20 is therefore preferably configured to measure the angular position of the movable member 21 about the auxiliary rotation axis Y.

To this end, the movable member 21 is advantageously supported rotatably on the main structure 101 and the angular position sensor 20 is fixed to the main structure 101.

As may be observed from the example of Figure 3, the angular position sensor 20 preferably defines a measurement axis Y', where applicable formed by the geometric centre of the sensor 20, which can advantageously be aligned with the auxiliary axis Y.

In other words, the magnet 21A and the sensor are coaxial so as to optimize the operation of the device.

It will be appreciated that, in some embodiments, the magnet 21A is substantially discoid in form and, indeed, is coaxial with the auxiliary rotation axis Y.

Now going into detail with regard to the kinematic characteristics of the valve group, as may be observed in Figure 2, the valve group 100 may comprise a movement conversion mechanism 3 in order to transmit the movement from the control element 1 to the movable member 21.

The movement conversion mechanism 3 is advantageously configured so as to convert the movement of the rotary control element 1 about the main axis X into a corresponding rotational movement of the movable member 21 about the auxiliary axis Y.

The movement may advantageously be brought about with a multiplication transmission ratio in order to increase the sensitivity of the sensor. In some embodiments, the movement conversion mechanism 3 comprises a first toothed portion 31 which is fixedly joined in terms of rotation to the control element 1 and a second toothed portion 32 which is fixedly joined in terms of rotation to the movable member 20 and which meshes with the first toothed portion 31. In other words, the transmission of the movement can be carried out by means of a gearing system.

Preferably, the first toothed portion 31 is constructed in the region of a collar 11 which is formed in the control element 1, as can better be seen in Figure 2.

In some embodiments, there may further be provided a step-down mechanism 33 which is, for example, formed by a pair of gears which are coaxial and which engage with the first toothed portion 31 and the second toothed portion 32, respectively.

The valve group 100 further comprises a control unit which receives the angular position $\alpha$ which is acquired by means of the angular position sensor 20.

This data item may advantageously be used to determine a residual time value in accordance with the selected flow TRV corresponding to the angular position $\alpha$ of the rotary control element 1. It will be appreciated that, in the context of the present invention, the term "residual time value in accordance with the selected flow TRV" will indicate a residual time value for supplying the gas contained inside the bottle, i.e. a residual capacity, which is calculated on the basis of the gas flow selected by means of the rotary control element 1. In this case, the actual physical characteristics for supplying the gas are not taken into consideration in order to calculate this value.

In order to associate a corresponding residual time value TRV with the different angular positions α, there may be provision for creating a data table, which is preferably stored in a storage unit of the control unit 4 and in which a residual supply time is associated with each angular position α of the rotary control element 1. In fact, under normal operating conditions, the gas flow supplied from the valve group is kept constant over time and this allows the residual supply time to be determined by means of experimental tests, where applicable in accordance with the type of bottle B used.

In fact, it will be possible to define tables for each type of bottle for which the valve group may be intended and to provide, during the installation step, or during a set-up step, the possibility of using the correct type of bottle.

However, the Applicant has observed that this residual time value TRV is not always completely representative of the actual gas flow. In fact, there may be found to be situations in which the flow is obstructed, for example, by obstructions of the tube, or situations in which the behaviour of the valve group is different from the operating situations, such as, for example, at the initial supply times or when the bottle is in the depleted phase.

To this end, the valve group also provides for the possibility of calculating a residual time value in accordance with the pressure TRΔP on the basis of a pressure value P of the gas which is present inside the bottle B. To this end, the valve group 100 may comprise a pressure sensor which is not illustrated in the Figures and which is capable of measuring this pressure value P.

Preferably, the residual time value in accordance with the pressure TRΔP is calculated according to the formula:

$$\text{TRDP} = \frac{(P(T_2) * V_b)}{Q_m} + T_2$$

where T2 is the time which has passed from the start of the supply; P(T2) is the pressure inside the container at the time T2; Vb is the volume of the bottle; Qm is a gas flow value associated with the angular position of the control element.

The Applicant has confirmed that, under normal gas supply conditions, the residual time value in accordance with the selected flow TRV and the residual time value in accordance with the pressure TRΔP have similar values. By comparing the two values, therefore, it is possible to understand whether the gas supply is being carried out under normal conditions and therefore it is possible to use the residual time value in accordance with the selected flow TRV as an indication of the residual capacity of the bottle, or not.

It will be appreciated that, in the context of the present invention, the term "normal conditions" is preferably intended to be understood to mean conditions in which there occurs one or more of the following conditions: the flow is not obstructed, for example, as a result of obstructions in the structure of the valve group or in the supply tube, the transient supply start step has been depleted, the pressurized container is not near depletion.

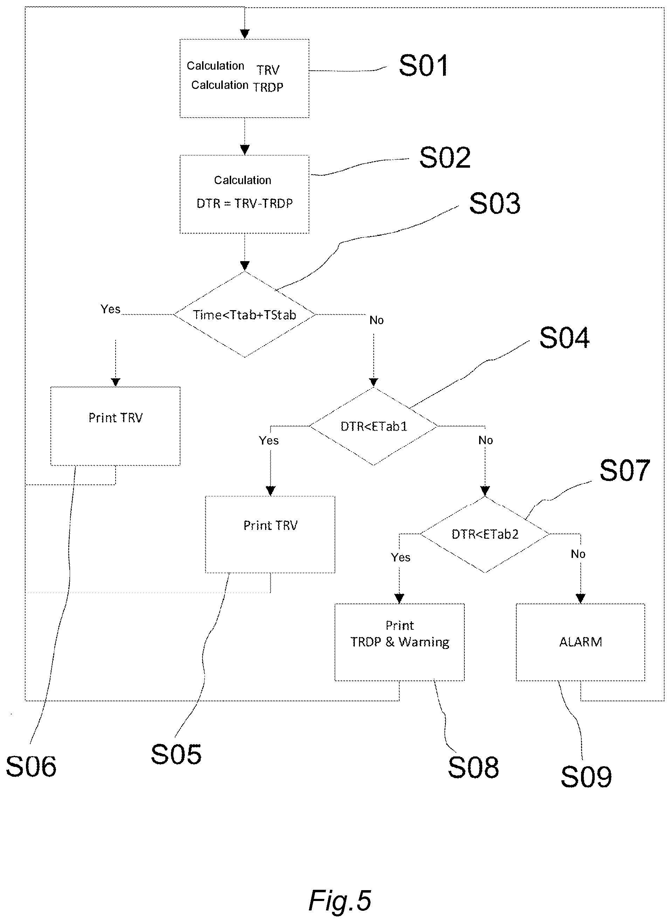

In preferred embodiments, the comparison between the residual time value in accordance with the selected flow TRV and the residual time value in accordance with the pressure TRΔP provides for calculating the difference DTR between these values, as illustrated in the step S02 of the block diagram of Figure 5.

This difference is therefore compared with a first predefined threshold ETab1 in the step S04.

If the difference DTR between the residual time value in accordance with the selected flow TRV and the residual time value in accordance with the pressure TRΔP is less than this first threshold ETab1, then the residual time value TRV is displayed, as described in Figure 5 in the step S05. In fact, this condition confirms that the two values are sufficiently comparable and the residual time value TRV can advantageously be used. The first threshold ETab1 can be determined on the basis of experimental tests, observing what is the variation between the two values if the operating conditions deviate from the normal ones.

If the difference exceeds this threshold, the difference is preferably compared with a second threshold ETab2, which is greater than the first threshold, as described in the step S07.

If the difference DTR between the residual time value in accordance with the selected flow TRV and the residual time value in accordance with the pressure TRΔP is greater than the first threshold ETab1, but less than the second threshold ETab2, then the residual time value in accordance with the pressure TRΔP is displayed, preferably together with a warning signal, because this deviation could indicate the occurrence of a number of problems (step S08).

If, instead, the second threshold ETab2 is also exceeded, there may be provision for the system to supply an alarm signal because this deviation between the two residual time values could indicate that the supply is not being carried out correctly (step S09).

In addition, there may be provision, before a predetermined time period has passed from an initial time of the passage of the gas flow, for the residual time value in accordance with the selected flow TRV to be in any case displayed regardless of the other parameters, as illustrated in the step S06 in the diagram of Figure 5.

In this case, it is not necessary to carry out the calculation of the difference DTR between the residual time value in accordance with the selected flow TRV and the residual time value in accordance with the pressure TRΔP which may therefore start to be carried out after the predetermined time period mentioned above has passed. In this manner, account can be taken of the fact that during the transient supply start steps the measurement of the residual time by means of pressure readings could be insufficiently reliable.

The method set out above may therefore be advantageously carried out by the control unit 4 of the valve group 100 which in turn transmits one value or the other or the potential alarm signal to the display 103.

The control unit 4 further allows the valve group to be provided with additional functionalities. As mentioned above, the normal supply of the gas can be monitored by considering operating parameters of the valve group or the pressurized container which include one or more from: time passed from an initial time of the passage of the gas flow, pressure P measured inside the container, temperature T of the gas, volume Vb of the container, angular position α of the rotary control element 1.

According to another aspect of the invention, the valve group is configured to measure an obstructed tube condition by considering a number of the above-mentioned parameters.

In fact, the Applicant has observed that, by monitoring the pressure and temperature, there can be identified situations in which the supply tube of the gas can be at least partially obstructed.

In preferred embodiments, this is carried out by considering the pressure increase which occurs at two different gas supply times and a temperature variation between the same times.

To this end, the control unit 4 can therefore be interfaced with the pressure sensor so as to measure the pressure P of the gas inside the pressurized container B at two different times. In particular, there may be defined a first time T0 and a second time Tf, after the first time T0, which define a predetermined time period.

The control unit 4 is further interfaced with a temperature sensor, which is preferably arranged on a supply pipe of the valve group so as to also measure the temperature of the gas at these times T0, Tf.

On the basis of these values, there is then calculated a pressure difference ΔP between the pressure measured at the first time and the pressure measured at the second time Tf and a temperature difference ΔTemp between the temperature measured at the first time T0 and the temperature measured at the second time Tf.

These values can advantageously be used in order to monitor the correct flow of gas through the supply tube. In fact, if the conditions for which the pressure difference ΔP is less than a predetermined value and the temperature difference ΔTemp is greater than or equal to zero occur simultaneously, it may be hypothesized that there is an obstruction in the supply tube.

This predetermined pressure value can be determined by means of experimental tests, for example, by simulating an obstruction of the tube and monitoring the progression of the pressure under such conditions.

Furthermore, the predetermined pressure value may be a function of the angular position α of the control element 1, i.e. it may be variable in accordance with the gas flow imposed by the user.

Preferably, the pressure and temperature measurement can also be associated with the angular position α of the control element 1 in order to prevent the monitoring of the tube from taking place when the valve group 100 is closed. In other words, the pressure of the gas and the temperature of the gas can be measured only when the control element 1 is rotated into an open position of the valve group 100.

The time period defined by the difference between the first time T0 and the second time Tf can also be variable in accordance with the angular position α of the control element 1.

Preferably, this time period decreases with an increase in the flow rate of gas imposed on the basis of the angular position α of the control element 1.

In this manner, the measurement frequency increases with an increase of the flow rate of the gas, allowing a reduction in the calculation operations carried out at the low flow rates, thereby optimizing the energy consumption of the control unit 4.

In one preferred embodiment, the time period may, for example, take up two different values. The passage between the two values can be carried out when the control element 1 exceeds a limit position αlim. In this manner, when the control element 1 is in a position between a closed position and the limit position αlim, the time period takes up the first value and, when it exceeds the limit position αlim, the time period takes up the second value.

In some embodiments, this limit position αlim corresponds to a value between 1/5 and 1/10 of the maximum flow rate of gas which can be supplied through the valve group 100 and, preferably, it corresponds to a flow rate of 2 l/min.

On the basis of yet another aspect, the valve group may also be configured to take into account the possible presence of a magnetic field which could compromise one or more functionalities of the system.

This function is preferably performed by means of the magnetic tunnel sensor which is used in the valve group 100. The magnetic tunnel sensor can in fact also advantageously be used to measure an intensity of the magnetic field.

Therefore, a limit value for the intensity of the magnetic field z can be defined, within which limit value the sensor operates correctly.

Consequently, the control unit 4 can be configured so as to display on the display device 103 the residual time value in accordance with the selected flow TRV and where applicable the residual time value in accordance with the pressure TR∆P only if the intensity of the magnetic field measured is less than the limit value z.

Vice versa, if the intensity of the magnetic field measured is greater than the limit value z, the control unit 4 can display the pressure value P and, where applicable, generate an alarm signal.

The invention thereby solves the problem proposed, at the same time achieving a plurality of advantages, including the possibility of efficiently informing the user with regard to the duration of possible gas supply from the bottle, limiting the risks of the gas becoming depleted. Furthermore, the valve group of the present invention allows the device to be readily provided with a number of functionalities with a simple and effective solution.

**Claims**

1. A method for monitoring the passage of gas through a supply tube, the tube being connected to an outlet port of a valve group (100) which is connected to a pressurized container (B), the valve group (100) comprising a main structure (101), a rotary control element (1) which is rotatably connected to the main structure (101) and which is configured so as to allow a passage of a variable flow of gas through the valve group in accordance with an angular position ($\alpha$) thereof about a main rotation axis (X), wherein the valve group (100) further includes a display device (103), the method comprising:

   a. measuring the pressure of the gas inside the pressurized container (B) at a first time (T0) and at a second time (Tf) after the first time (T0);
   b. measuring the temperature of the gas at the first time (T0) and at the second time (Tf);
   c. calculating a pressure difference ($\Delta$P) between the pressure measured at the first time and the pressure measured at the second time (Tf);
   d. calculating a temperature difference ($\Delta$Temp) between the temperature measured at the first time (T0) and the temperature measured at the second time (Tf);
   e. generating an alarm signal if the pressure difference ($\Delta$P) is less than a pre-established value and the temperature difference ($\Delta$Temp) is greater than or equal to zero.

2. A method according to claim 1, comprising measuring the angular position ($\alpha$) of the control element (1), the pressure of the gas and the temperature of the gas being measured only when the control element (1) is rotated into a position for opening the valve group (100).

3. A method according to claim 2, wherein the first time (T0) and the second time (Tf) define a time period, the time period being variable in accordance with the angular position ($\alpha$) of the control element (1).

4. A method according to claim 3, wherein the time period decreases with an increase in the flow rate of gas imposed on the basis of the angular position ($\alpha$) of the control element (1).

5. A method according to claim 3 or 4, wherein the time period takes on at least two different values, and wherein there is defined such a limit position ($\alpha$lim) of the control element (1) that, when the control element (1) is in a position between a closed position and the limit position ($\alpha$lim), the time period takes on the first value and when the limit position ($\alpha$lim) is exceeded the time period takes on the second value.

6. A method according to claim 5, wherein the limit position ($\alpha$lim) corresponds to a value between 1/5 and 1/10 of the maximum flow rate of gas which can be supplied through the valve group (100).

7. A method according to claim 6, wherein the limit position ($\alpha$lim) corresponds to a flow rate of 2 l/min.

8. A method according to any one of the preceding claims, wherein the angular position ($\alpha$) of the control element (1) is measured by means of a magnetic tunnel effect angle sensor TMR.

9. A valve group (100) for pressurized containers comprising a main structure (101), a rotary control element (1) which is rotatably connected to the main structure (101) and which is configured so as to allow a flow of gas through the valve group in accordance with an angular position ($\alpha$) thereof about a main rotation axis (X), a pressure sensor, a temperature sensor and a control unit (4) being configured to carry out the method according to any one of the preceding claims.

10. A valve group (100) according to claim 9, further comprising a measuring device (2) for the angular position ($\alpha$) of the control element (1) which includes an angular position sensor (20) which is interfaced with the control unit (4).

11. A valve group (100) according to claim 10, wherein the angular position sensor (20) comprises a magnetic tunnel effect angle sensor TMR.

**Patentansprüche**

1. Verfahren zum Überwachen des Gasdurchflusses durch ein Versorgungsrohr, wobei das Rohr mit einem Auslassanschluss einer Ventilgruppe (100) verbunden ist, die mit einem Druckbehälter (B) verbunden ist, wobei die Ventilgruppe (100) eine Hauptstruktur (101), ein drehbares Steuerelement (1), das drehbar mit der Hauptstruktur (101) verbunden ist und eingerichtet ist, um einen variablen Gasdurchfluss durch die Ventilgruppe gemäß ihrer Winkelposition ($\alpha$) um eine Hauptdrehachse (X) zu ermöglichen, wobei die Ventilgruppe (100) ferner eine Anzeigevorrichtung (103) umfasst, wobei das Verfahren aufweist:

> a. Messen des Drucks des Gases im Druckbehälter (B) zu einem ersten Zeitpunkt (T0) und zu einem zweiten Zeitpunkt (Tf) nach dem ersten Zeitpunkt (T0);
> b. Messen der Temperatur des Gases zum ersten Zeitpunkt (T0) und zum zweiten Zeitpunkt (Tf);
> c. Berechnen einer Druckdifferenz ($\Delta$P) zwischen dem zum ersten Zeitpunkt gemessenen Druck und dem zum zweiten Zeitpunkt (Tf) gemessenen Druck;
> d. Berechnen einer Temperaturdifferenz ($\Delta$Temp) zwischen der zum ersten Zeitpunkt (T0) gemessenen Temperatur und der zum zweiten Zeitpunkt (Tf) gemessenen Temperatur;
> e. Erzeugen eines Alarmsignals, wenn die Druckdifferenz ($\Delta$P) kleiner als ein voreingestellter Wert ist und die Temperaturdifferenz ($\Delta$Temp) größer oder gleich Null ist.

**2.** Verfahren nach Anspruch 1, das ein Messen der Winkelposition ($\alpha$) des Steuerelements (1) aufweist, wobei der Druck des Gases und die Temperatur des Gases nur gemessen werden, wenn das Steuerelement (1) in eine Position zum Öffnen der Ventilgruppe (100) gedreht wird.

**3.** Verfahren nach Anspruch 2, wobei der erste Zeitpunkt (T0) und der zweite Zeitpunkt (Tf) einen Zeitraum definieren, wobei der Zeitraum gemäß der Winkelposition (d) des Steuerelements (1) variabel ist.

**4.** Verfahren nach Anspruch 3, wobei der Zeitraum mit einer Zunahme der Gasdurchflussmenge abnimmt, die auf der Grundlage der Winkelposition ($\alpha$) des Steuerelements (1) vorgegeben wird.

**5.** Verfahren nach Anspruch 3 oder 4, wobei der Zeitraum zumindest zwei verschiedene Werte annimmt, und wobei eine derartige Grenzposition ($\alpha$lim) des Steuerelements (1) gebildet wird, dass, wenn sich das Steuerelement (1) in einer Position zwischen einer geschlossenen Position und der Grenzposition ($\alpha$lim) befindet, der Zeitraum den ersten Wert annimmt, und wenn die Grenzposition ($\alpha$lim) überschritten wird, der Zeitraum den zweiten Wert annimmt.

**6.** Verfahren nach Anspruch 5, wobei die Grenzposition ($\alpha$lim) einem Wert zwischen 1/5 und 1/10 der maximalen Gasdurchflussmenge entspricht, die durch die Ventilgruppe (100) zugeführt werden kann.

**7.** Verfahren nach Anspruch 6, wobei die Grenzposition ($\alpha$lim) einer Durchflussmenge von 2 l/min entspricht.

**8.** Verfahren nach einem der vorhergehenden Ansprüche, wobei die Winkelposition ($\alpha$) des Steuerelements (1) mittels eines magnetischen Tunneleffekt-Winkelsensors TMR gemessen wird.

**9.** Ventilgruppe (100) für Druckbehälter mit einer Hauptstruktur (101), einem drehbaren Steuerelement (1), das drehbar mit der Hauptstruktur (101) verbunden ist und das eingerichtet ist, um einen Gasfluss durch die Ventilgruppe gemäß einer Winkelposition ($\alpha$) um ihre Hauptdrehachse (X) zu ermöglichen, einem Drucksensor, einem Temperatursensor und einer Steuereinheit (4), die eingerichtet sind, um das Verfahren gemäß einem der vorhergehenden Ansprüche auszuführen.

**10.** Ventilgruppe (100) gemäß Anspruch 9, die ferner eine Messvorrichtung (2) für die Winkelposition ($\alpha$) des Steuerelements (1) aufweist, die einen Winkelpositionssensor (20) umfasst, der mit der Steuereinheit (4) verbunden ist.

**11.** Ventilgruppe (100) gemäß Anspruch 10, wobei der Winkelpositionssensor (20) einen magnetischen Tunneleffekt-Winkelsensor TMR aufweist.

## Revendications

**1.** Procédé de contrôle du passage du gaz à travers un tube d'alimentation, le tube étant relié à un orifice de sortie d'un groupe de vannes (100) qui est relié à un récipient sous pression (B), le groupe de vannes (100) comprenant une structure principale (101), un élément de commande rotatif (1) qui est relié de manière rotative à la structure principale (101) et qui est configuré de manière à permettre le passage d'un flux de gaz variable à travers le groupe de vannes en fonction d'une position angulaire ($\alpha$) de celui-ci autour d'un axe de rotation principal (X), le groupe de vannes (100) comprenant en outre un dispositif d'affichage (103), le procédé consistant à :

> a. mesurer la pression du gaz à l'intérieur du récipient sous pression (B) à un premier moment (T0) et à un second moment (Tf) après le premier moment (T0) ;

b. mesurer la température du gaz au premier moment (T0) et au second moment (Tf) ;

c. calculer une différence de pression (ΔP) entre la pression mesurée au premier moment et la pression mesurée au second moment (Tf) ;

d. calculer la différence de température (ΔTemp) entre la température mesurée au premier moment (T0) et la température mesurée au second moment (Tf) ;

e. générer un signal d'alarme si la différence de pression (ΔP) est inférieure à une valeur préétablie et si la différence de température (ΔTemp) est supérieure ou égale à zéro.

2. Procédé selon la revendication 1, comprenant la mesure de la position angulaire (α) de l'élément de commande (1), la pression du gaz et la température du gaz étant mesurées uniquement lorsque l'élément de commande (1) est tourné dans une position permettant d'ouvrir le groupe de vannes (100).

3. Procédé selon la revendication 2, dans lequel le premier moment (T0) et le second moment (Tf) définissent une période de temps, la période de temps étant variable en fonction de la position angulaire (α) de l'élément de commande (1).

4. Procédé selon la revendication 3, dans lequel la période de temps diminue avec une augmentation du flux de gaz imposée sur la base de la position angulaire (α) de l'élément de commande (1).

5. Procédé selon la revendication 3 ou 4, dans lequel la période de temps prend au moins deux valeurs différentes, et dans lequel il est défini une position limite (αlim) de l'élément de commande (1) telle que, lorsque l'élément de commande (1) est dans une position entre une position fermée et la position limite (αlim), la période de temps prend la première valeur et lorsque la position limite (αlim) est dépassée, la période de temps prend la seconde valeur.

6. Procédé selon la revendication 5, dans lequel la position limite (αlim) correspond à une valeur comprise entre 1/5 et 1/10 du flux maximal de gaz pouvant être fourni par le groupe de vannes (100).

7. Procédé selon la revendication 6, dans lequel la position limite (αlim) correspond à un débit de 2 1/min.

8. Procédé selon l'une quelconque des revendications précédentes, dans lequel la position angulaire (α) de l'élément de commande (1) est mesurée au moyen d'un capteur d'angle à effet tunnel magnétique TMR.

9. Groupe de vannes (100) pour récipients sous pression comprenant une structure principale (101), un élément de commande rotatif (1) relié de manière rotative à la structure principale (101) et configuré de manière à permettre un flux de gaz à travers le groupe de vannes en fonction d'une position angulaire (α) de celui-ci autour d'un axe de rotation principal (X), un capteur de pression, un capteur de température et une unité de commande (4) configurée pour mettre en œuvre le procédé selon l'une quelconque des revendications précédentes.

10. Groupe de vannes (100) selon la revendication 9, comprenant en outre un dispositif de mesure (2) de la position angulaire (α) de l'élément de commande (1) qui comprend un capteur de position angulaire (20) interfacé avec l'unité de commande (4).

11. Groupe de vannes (100) selon la revendication 10, dans lequel le capteur de position angulaire (20) comprend un capteur d'angle à effet tunnel magnétique TMR.

*Fig.1*

*Fig.3*

*Fig.2*

**Fig.4**

Fig.5

**EP 4 479 676 B1**

**REFERENCES CITED IN THE DESCRIPTION**

**Patent documents cited in the description**

- US 10619795 B2
- EP 3754245 A
- US 9273799 B
- US 9816642 B
- EP 3405716 A
- EP 3097342 A